# EUROPEAN PATENT SPECIFICATION

(11) **EP 3 543 891 B1**
(45) Date of publication and mention of the grant of the patent: **04.08.2021**
(21) Application number: 18382197.4
(22) Date of filing: 23.03.2018
(51) Int. Cl.: G06F 21/64

(54) **A COMPUTER IMPLEMENTED METHOD AND A SYSTEM FOR TRACKING OF CERTIFIED DOCUMENTS LIFECYCLE AND COMPUTER PROGRAMS THEREOF**
COMPUTERIMPLEMENTIERTES VERFAHREN UND SYSTEM ZUR VERFOLGUNG DER LEBENSDAUER ZERTIFIZIERTER DOKUMENTE UND COMPUTERPROGRAMME DAFÜR
PROCÉDÉ MIS EN OEUVRE PAR ORDINATEUR ET SYSTÈME DE SUIVI DU CYCLE DE VIE DE DOCUMENTS CERTIFIÉS ET SES PROGRAMMES INFORMATIQUES

(43) Date of publication of application: 25.09.2019
(73) Proprietor: Telefonica Cibersecurity & Cloud Tech S.L.U., 28050 Madrid (ES)
(72) Inventor: BIANZINO, Aruna Prem, 28013 Madrid (ES); SANCHEZ DE ROJAS RODRIGUEZ DE ZULOAGA, Emilio, 28013 Madrid (ES); BALBIN SANCHEZ, Sara, 28013 Madrid (ES); SARWAT SHAKER, Rames, 28013 Madrid (ES)
(74) Representative: Carlos Hernando, Borja

(56) References cited:
- WO-A2-2016/189488
- US-A1- 2017 048 216
- Roy Lai ET AL: "Blockchain - From Public to Private" In: "Blockchain - From Public to Private", 1 January 2018 (2018-01-01), Academic Press, US, XP055481199, ISBN: 978-0-12-812282-2 pages 145-177, DOI: 10.1016/B978-0-12-812282-2.00007-3,
- ELLI ANDROULAKI ET AL: "Hyperledger Fabric: A Distributed Operating System for Permissioned Blockchains", ARXIV.ORG, CORNELL UNIVERSITY LIBRARY, 201 OLIN LIBRARY CORNELL UNIVERSITY ITHACA, NY 14853, 30 January 2018 (2018-01-30), XP081227446, DOI: 10.1145/3190508.3190538

## Description

### Field of the invention

The present invention generally relates to authenticity and integrity of documents. In particular, present invention relates to a computer implemented method, and also to a system and computer programs, for tracking of certified documents lifecycle, said documents being previously certified with integrity and authenticity guarantees.

### Background of the invention

When a user or an entity is dealing with a document, being it in paper or digital form, they face a common problem: verifying the authenticity and integrity of the document. The authenticity of a document or certificate relates to the fact that it has actually been emitted by its emitting entity on the stated date. On the other hand, the integrity of a document or certificate relates to the fact that it has not been edited after its emission - or current version - (added/removed/altered text).

Different practices are currently used to check whether a document is authentic and has not been edited since its emission (i.e., integrity), or to track the document history in terms of document access and editing/versioning. All of them present limitations.

Documents may come with an Administrative Reference Code, by which a service may provide the emission date of the document as well as its issuer (to check the document authenticity) or the whole document (authenticity and integrity). The latter case is prone to data leak, while the first does not guarantee integrity. Furthermore, in both cases, human intervention is always needed to compare the emission date and/or the whole document with the original one, making the system prone to eventual human error.

Some patent applications are known in the field, for instance:
US2017048216 A1 discloses a document modification tracking using a distributed ledger.
WO2016189488 A2 discloses a validation method for validating instances created from an original document.

US-A1-20140049802 describes a system which is based on the generation of encoded image ETCODE using steganographic techniques, to be printed with the document, using conventional printers. The decoding is performed by a digital camera portable device, obtaining therefore the information hidden in ETCODE, and then confronted with the information about the document in its digital version present in a database. The described solution does not rely on a trusted third party nor it describes how the comparison between the presented copy and the stored copy of the document is performed and whether it is available both for digital and digitalized documents, or not.

WO 2008108861 describes a method for processing electronic documents, such as electronic invoices, specifications, or contracts, to ensure authenticity, integrity, confidentiality, and non-repudiation of the document. A third party service provider is established as the agent for two interacting parties. The third party service provider receives an electronic document from a first party, the electronic document relating to a transaction between the parties, the transaction being, for example, a sale or a contract. The third party service provider provides an electronic signature and certification for the document and archives the document, providing it, along with the certification, to the second party or others. The described solution only works for digital documents and not for digitalized documents, for which no guarantee is offered. Furthermore, the solution relies on digital certificates, suffering of the same limitations.

KR 1020080014194 describes an electronic document repository system that includes an authentication module, a registration module, a reading module, an issuing module and a certificate module. The authentication module is connected to a user terminal through a network, secures authenticity of electronic documents, performs user authentication through a log-in process when a user accesses the electronic document repository system. The registration module checks an electronic document information package transmitted from the user, generates metadata, adds authentication information to the metadata and stores the metadata in a database. The reading module generates a reading information package and transmits the reading information package to the user when the user wants to read an electronic document. The issuing module generates an issuing information package and transmits the package to the user when the user requests the issuing module to issue an electronic document. The certification module issues a certificate for the electronic document or verifies an issued certificate. Contrary to present invention, this solution only provides document issuing and retrieving functionalities, providing documents with embedded metadata for authenticity check on the user side, but it does not allow to automatically check the authenticity and integrity of a carried document: it only allows a manual comparison of a carried document with the digital copy obtained from the repository, in order to verify the document authenticity and integrity.

US-A1-20090193259 describes a solution to store documents and check their authenticity. The solution relies on a hash of the document, fixed to the document itself with a digital signature. The solution only considers digital documents, and not digitalized ones. Moreover, this solution includes the digest of the hash in a visible fashion inside the document, and not in an unappreciable fashion as described in present invention. Furthermore, the solution does not allow including into the document metadata, but only a hash of the document itself. Furthermore, no details are disclosed on how the document hash is computed, or on how the documents are stored in an unalterable way.

US-A1-20100122348 A1 describes a solution to digitalize documents and store them in a repository to check their authenticity on the basis of a mark applied to the digital version. The mark is a combination of the issuer and stored marks. Contrary to present invention, this solution only considers digitalized documents and not native digital ones. The described solution includes a visible mark in the document. As such, it only guarantees the document integrity on a manual comparison. Furthermore, the included mark does not allow storing metadata. Finally, no details are disclosed on how the document is stored in an unalterable way on the storing side.

US20180025181A1 describes a solution to guarantee the integrity of big quantity of data files by constantly monitoring a data storage through a computer system, which records any change in the data files using a DLT as repository and including the hash of the datafile for which a change has been detected. The described solution only monitors files in a specific storage base, not in any location. Furthermore, the described solution only detects and records changes concerning changes of the content of the data files, not other kind of operations, such as changes in the file metadata, or access to the file by specific users. Finally, changes to the files as recorded by the described solution do not include metadata on the user executing them and other similar information, which are of key importance for security applications of the system. Overall, the described solution represents a reactive system, detecting the changes to the files once they occurred and not a proactive solution recording the changes directly from the system component executing them.

More solutions are therefore needed to track operations on certified files through their lifecycle in an immutable and confidential register.

### Description of the Invention

Embodiments of the present invention provide according to an aspect a computer implemented method for tracking of certified documents lifecycle, in an immutable register, while keeping confidentiality on the changes themselves. The method first comprises receiving, by a second computer system, from a first computer system (issuer), at least one document (a digital document, e.g., a PDF) to be certified, the at least one document being preferably identified in the second computer system with metadata at least including an identifier of the first computer system and a timestamp. Then, the second computer system certifies the received document by applying to the received document a watermark (i.e. an alteration of the document that may include an identifying image or pattern, such as a character spacing or character deformation in the case of text, or pixel shifting in frequency or space in the case of images), providing a modified document. The modified document is sent by the second computer system to the first computer system to be stored or used.

Upon the modified document is submitted to a transaction, a fourth computer system receives, from the second computer system, an identifier of the modified document and an identifier of an operation executed on the modified document during the transaction, and stores information about the transaction in a third computer system hold within a distributed ledger such as a DLT. Then, the third computer system executes a computer program storing therein pairings composed of said identifier of the modified document and a hash value of the transaction and transmits/sends the hash value to the fourth computer system. Upon the reception of the hash value, the fourth computer system, stores an address of the computer program, an interface of the computer program and the identifier of the modified document into a record of a database. Such that the record can be used to track any future transaction executed on the modified document, i.e. through the transaction hash, and knowing the document identifier the complete set of transactions executed over a document during its lifecycle can be tracked by the fourth computer system.

The computer program (or document manager) executed by the third computer system is a computer program that is able to define and store functions, struts and pointers, in this particular case pointers to transactions referring to each operation performed on the modified document. This information is stored in a manager's storage. Each manager (each computer program) has its own storage and memory space and both are in the third computer system.

The computer program interface (or document manager interface) is a data encoding scheme used in the third computer system to work with the document manager. The computer program interfaces defines how data structures or computational routines are accessed.

As stated before, the computer program (or document manager) stores pairings composed of a unique identifier of the modified document (document ID) and a hash value of the transaction. This pairing can be referred as a documentlD-hash pairing. As stated before, the storage of the document manager is located in the third computer system; as a consequence, each documentlD-hash pairing data is stored in the third computer system as well. There is a different document manager for each unique original document the invention processes, i.e. the document manager is specific for each document the lifecycle of which has to be tracked.

According to the proposed method, the operation executed on the modified document may include its creation, its editing (e.g., signing, adding or removing text, etc.), metadata addition, change or removal, watermark insertion/extraction, biometric signing, document access, etc. The operation may also include processes performed with the document, such as sharing the document through different channels like email, sharing a link to the document stored in an online repository, etc.

Each operation corresponds to a specific identification code and is bound to specific metadata, including a unique ID of the user executing it (and eventually his/her affiliation), a timestamp, and eventual further data, specific for the corresponding operation, e.g., policy setting for the metadata analysis/insertion/editing, result of the document access attempt (success, partial access, failure, etc.), etc.

Different modules may be included in the fourth computer system to take care of the different kind of actions to which the document may be subject to, e.g., a module for the operations concerning metadata (access, editing, addition, removal), a module for the operations concerning the watermark (addition, extraction, removal), a module for the operations concerning the document biometrical signature (signature, extraction, removal), a module for the operations concerning the document access and Information Rights Management (IRM) (access attempt, visualization, editing), etc. This set of operations may be executed on a document in any location, including a local document, a document in a cloud system or in a shared memory and more, as the operations are executed on specific modules, which are connected to the described system and are needed to execute the operations themselves.

In an embodiment, the certifying step comprises computing, by the second computer system, a first cryptographic function (e.g., a hash function) of the received document and sending the computed first cryptographic function to the third computer system, the third computer system storing the first cryptographic function in at least one memory thereof. Then, the second computer system receives a first message digest corresponding to an identifier of having stored the first cryptographic function in the third computer system. Following, in the proposed method, the second computer system computes a key using the received first message digest and metadata of the document, said computed key being decoded into the above-mentioned watermark. The second computer system also computes a second cryptographic function of the modified document and sends the computed second cryptographic function and the modified document to the third computer system for storage thereof. Finally, the second computer system receives a second message digest corresponding to an identifier of having stored the second cryptographic function in the third computer system, and stores it locally.

By DLT it has to be understood a consensus of replicated, shared, and synchronized digital data geographically spread across multiple sites, countries, or institutions. There is no central administrator or centralized data storage. As a consequence, the system results fault tolerant and universal (i.e., can be adopted independently of the geographical location). A peer-to-peer network is required as well as consensus algorithms to ensure replication across nodes is undertaken. A Block chain is a possible implementation of the DLT.

According to an embodiment, the watermark is replicated in different points of the modified document allowing hence to check for the authenticity of the document or even for the authenticity of a portion of the document, if it has been damaged (i.e., a broken document, where a part is missing, or dirty/crumpled paper document, etc.). Preferably, the watermark is configured to be indistinguishable to a human eye, while can be identified at a digital inspection.

According to the proposed method, the modified document can be sent, by the first computer system, to a user upon the latter having been validly authenticated. According to a first embodiment, the second computer system receives a digital document from the user and further extracts the watermark from the received digital document and decodes from it the key, and recovers the second cryptographic function from the third computer system by providing to the latter the second message digest. Then, the second computer system extracts the metadata of the document from the key, computes a third cryptographic function of the digital document and compares the third cryptographic function with the second cryptographic function that has recovered from the third computer server. Finally, the second computer system informs the user of a result of said comparison and also sends metadata to the latter.

The recovering of the second cryptographic function and the extraction of the metadata can be performed at the same time.

According to a second embodiment, the second computer system receives a digitalized document (e.g., a scan/picture of a digital document previously printed to paper or the conversion to a different digital format of a digital document) from the user and further extracts the watermark from the received digitalized document decoding from it the key. Then, the second computer system, extracts the metadata of the document, including the identifier of the first computer system and the timestamp from the key, and the first message digest from the key, and uses the first message digest to recover the first cryptographic function from the third computer system in order to check the document existence and registration. Finally, the second computer system sends a response to the user about the existence and registration of the document in the third computer system and the extracted metadata for further authenticity check by the user.

The extraction of the metadata and the extraction of the first message digest can be performed at the same time.

According to a third embodiment, the second computer system authenticates identification information of the user and upon said authentication is confirmed the second computer system receives a digitalized document from the user. Then, the second computer system extracts the watermark from the received digitalized document and decodes from it the key, using the second message digest to recover the modified document from the third computer system. Following, the second computer system, extracts the metadata of the received digital document including the identifier of the first computer system and the timestamp from the key. Finally, the second computer system, sends to the user the extracted metadata so that (s)he can verify the authenticity of the document, and also sends to him/her the recovered modified document so that (s)he can check its integrity.

Other embodiments of the invention that are disclosed herein include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention guarantees:
- Document integrity, i.e., guarantee that a document has not been altered since its emission;
- Document authenticity, meaning that the origin of a document can be univocally identified;
- Proof of existence, meaning that it is possible to identify the time reference when the document existed;
- Non-repudiation in origin, meaning that the issuer of a document cannot repudiate being the originator of such document;
- Confidentiality, i.e., only the issuer and the receiver can access to the original document as stored in the repository, after successful authentication (while any user carrying the document can access to the authenticity and proof of existence info about the carried document). Furthermore, the applied watermark is not appreciable at human inspection, resulting hence secure with respect to external observers and human errors in transcription in contrast to the Administrative Reference Code for example, that is visible and then insecure;
- Robustness, meaning that the above guarantees last also in case of damaged or partial documents, as well as both in case of digital and digitalized documents.
- The possibility to track all the operations to which a document has been subject during its lifecycle, recording them in an immutable registry, including metadata on the operations and while keeping confidentiality on the document and on the operations.
- The offered functionalities can be used on any document, located in any local system, cloud system or shared support of any kind.

Furthermore, the provided guarantees are based on a distributed ledger infrastructure, being hence:
- Everlasting, meaning that the stored information cannot be edited or delated in time;
- Robust: as the infrastructure is distributed, the resulting is fault tolerant;
- Universal, meaning that it can be accessed independently on the geographical location.

Finally, present invention is based on a trusted third party, guaranteeing hence:
- Neutrality with respect to the document storage and characteristics.
- Accessibility, meaning that the solution is accessible also by private issuers and not only by Public Administrations implementing it.

### Brief Description of the Drawings

The previous and other advantages and features will be more fully understood from the following detailed description of embodiments, with reference to the attached drawings, which must be considered in an illustrative and non-limiting manner, in which:
Fig. 1 is a sequence diagram of document registration by an issuer or first computer system.
Fig. 2 is a sequence diagram of integrity and authenticity check by a user for a digital document.
Fig. 3 is a sequence diagram of the authenticity check by a user for a digitalized document.
Fig. 4 is a sequence diagram of integrity and authenticity check by a user for a digitalized document.
Fig. 5 is an example of the system architecture for implementing a method for tracking of certified documents lifecycle.
Fig. 6 is a sequence diagram of an example of an operation executed over a document and its corresponding recording in the system architecture of Fig. 5.

### Detailed Description of the Invention and of several embodiments

Present invention allows to guarantee the integrity and authenticity of a document in an automatic and real time fashion, while also guaranteeing the proof of existence in time of the checked document, the non-repudiation from the document issuer, the confidentiality of the document, a universal access to the solution, in space and time, the solution neutrality with respect to the issuer and user, and the robustness of the solution to document damages. Furthermore, the present invention allows keeping an immutable and confidential register of all the operations executed on documents/files through their lifecycle, mapping them to the corresponding metadata. This register also allows mapping the operations to the document, to a specific timestamp, to the user executing them and to eventual specific policies corresponding to the operation, allowing guaranteeing the security of all the documents monitored by the solution.

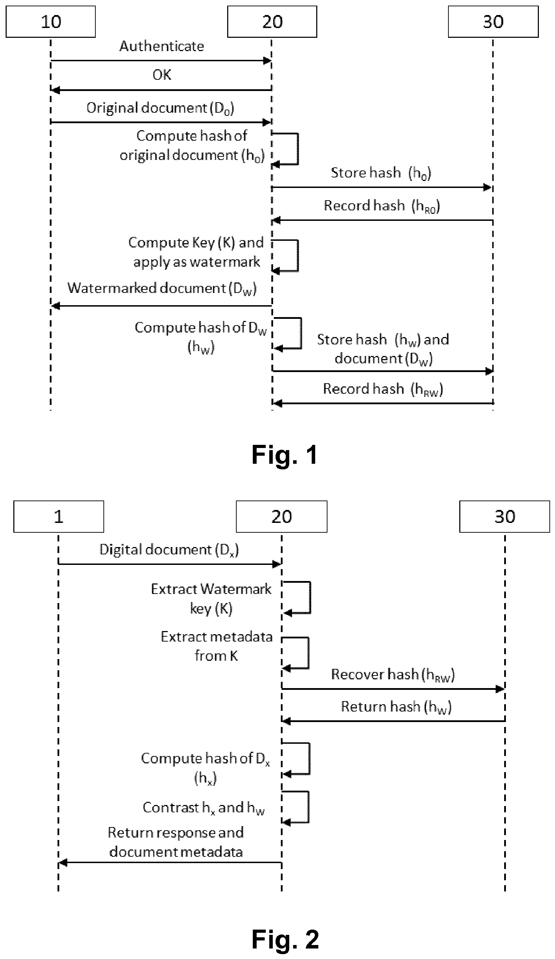

When a document is emitted by an authorized issuer (or first computer system as termed in the claims) 10, i.e., an entity (private or public) authorized to issue documents and store them using the proposed method, (Fig. 1), before it is delivered to the final user 1; the issuer 10 registers the document in the target system. As a first step for the document registration, the issuer 10 sends the digital document to the target system (or second computer system as termed in the claims) 20. Only authorized issuers can send documents to the target system 20. Their authorization is guaranteed by a proper authentication system. The limitation of the issuer 10 prevents the emission of false documents on behalf of other issuers, while the everlasting and unalterable nature of a distributed ledger system such as a DLT 30 guarantees the proof of existence of the document and the non-repudiation of the same on the issuer 10 side.

Once an original document D₀ is received by the target system 20, the target system 20, in an embodiment, certifies it by applying a watermark to the document D₀, providing a modified document D_{w}, which is further sent to the issuer 10.

In a more complex embodiment, the certification of the document D₀ involves the calculation, by the target system 20, of a first cryptographic function such as a hash function of the document h₀ which is stored in the DLT 30. Each time the first cryptographic function is stored in a DLT 30, a first digest is returned (record hash - h_{R0}). The returned first digest is combined with the identifier of the issuer 10, the timestamp and eventual other metadata to create a key K, which is decoded into the watermark to be applied to the original document, as well as for future checks on the document authenticity. The document obtained after the application of the watermark D_{W} (i.e., the modified document) is returned to the issuer 10 to be delivered to the final user 1. Furthermore, a second cryptographic function, such as a hash function of the modified document D_{W}, is computed and stored in the DLT 30 for future integrity check; together with the modified document D_{W} itself.

According to the proposed method, the watermark applied to the document consists of a special watermark representing a code (key K) and replicated in different points of the document itself, allowing hence checking for the authenticity of the document or even for the authenticity of a portion of the document, if it has been damaged. The watermark, furthermore, cannot be appreciated by a human inspection, guaranteeing hence security against external observers, as well as robustness to human errors.

Any final user 1 may, according to a first embodiment, verify anytime the authenticity and integrity of a digital document in their possession - given that the original document has been registered using the described solution - by sending it to the described target system 20 (Fig. 2). When a digital document Dₓ is received by the target system 20, the latter extracts the watermark from the received document Dₓ and decodes from it the key K. Then the digest of the second cryptographic function is used to retrieve from the DLT 30 the second cryptographic function h_{W} of the document deposited by the issuer 10. Preferably, at the same time, the document metadata is extracted from the key K. A third cryptographic function such as a hash function of the received document hₓ is computed by the target system 20 and contrasted against the stored second cryptographic function h_{W}. If the contrast is positive (i.e. if they are equal), a positive answer of authenticity and integrity of the document is returned to the final user 1, otherwise a negative answer is returned. Furthermore, metadata about the document and the issuer 10 is returned to the final user 1.

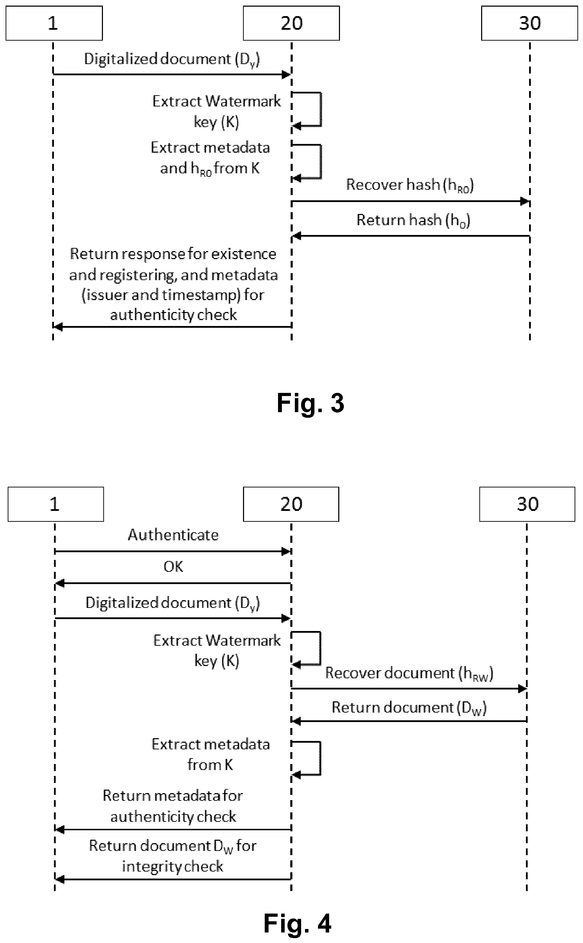

In a similar way, any final user may, according to a second embodiment, verify anytime the authenticity of a paper or digitalized document (photo, scan, format conversion) - given that the original document has been registered using the described target system 20 - by sending the digitalized document to the latter (Fig. 3). When a digitalized document D_{y} is received by the target system 20, the latter extracts the watermark from it and decodes from it the key K. Then the document metadata is extracted from the key, including the issuer identifier, the registration timestamp and eventual other metadata included at the moment of the registration of the original document D₀. Preferably, at the same time, the first digest h_{R0} is extracted from the key K. Besides, the firs digest h_{R0} is used to recover the first cryptographic function hₒ from the third computer system 30 in order to check the document existence and registration. The obtained metadata is then returned to the final user 1 for authenticity check of the issuer 10 identity, issuing timestamp and eventual other included check items. This second check on the user side avoids the possibility of reusing a valid original digest h_{R0} on fake documents.

Any final user may also, according to a third embodiment, obtain the modified document and verify anytime the authenticity and integrity of a paper or digitalized document (photo, scan, format conversion) (Fig. 4) - given that the original document has been registered using the described solution - by authenticating to the target system 20. The user 1 authentication may be based on a personal identification string (password), a security token, a mobile phone holding (including eventual restrictions to the user authentication on the basis of the mobile phone geographical location), or on a combination of more than one of the listed authentication factors. Once the authentication has been confirmed by the target service 20, the final user 1 sends the digitalized document D_{y} to the target system 20. Then the target system 20 extracts the watermark key K from it and translates it into the key K. Then the second message digest h_{rw} is used to retrieve from the DLT 30 the registered modified document D_{W}, furthermore, the available metadata is extracted from the key K including the issuer identifier, the registration timestamp and eventual other metadata included at the moment of the registration of the original document D₀. Finally, the obtained metadata is returned to the final user 1 for authenticity check, and the watermarked document D_{W} is returned to the final user 1 for integrity check of the digitalized document.

The described service is implemented in an organization independent of both the issuer 10 and the final user 1, guaranteeing neutrality in their respect and constituting a trusted third party, accessible by any issuer (being it private or public) and by any user.

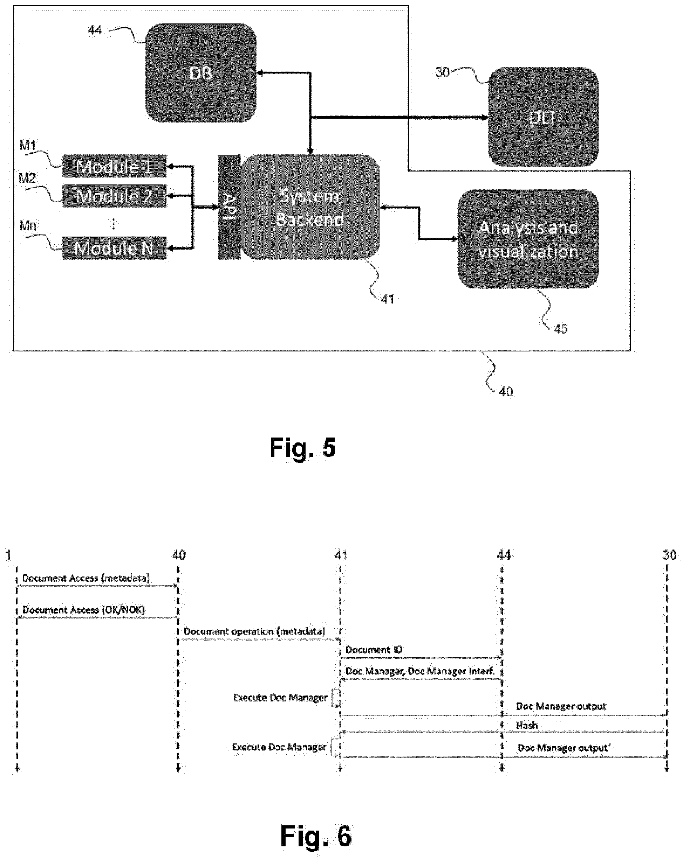

Furthermore, documents/files D_{w} may be monitored by the present invention allowing recording any operation executed on them. The documents D_{w} may be located on any support, including local storage, cloud systems and shared storage. Fig. 5 illustrates an example of the system architecture for allowing the tracking of the certified documents D_{w}.

The operations are executed on the documents D_{w} preferably through specific modules M1, M2...Mn, each one implementing a specific type of operation, including document creation and editing, metadata analysis, insertion, editing and deleting, watermark insertion and extraction, biometric signing and signature extraction, document access for visualization, editing, etc. Each operation is preferably executed by a specific module M1, M2...Mn, which, when called by the final user to execute a transaction, passes the data of the operation to a system backend 41 of a fourth computer system 40, which stores it in the DLT 30. The data stored for each operation includes a unique ID of the user executing it and eventually his/her affiliation, a unique ID of the document D_{w} on which the operation is executed, a timestamp of the operation, an ID of the specific operation and eventual setting and policies for the operation (e.g., policies for the metadata analysis of a document), and the eventual outcome of the operation over the document (e.g.,. success or failure).

The DLT 30 stores two different kinds of information: a) the different hashes of the transactions and its document identifiers in an array structure defined in the document manager, and b) the metadata associated to each operation performed on a document D_{w}, included in each transaction.

The system backend 41 is a set of computer programs orchestrating the operations to be performed by each element of the solution. Particularly it includes the document manager and the script, as defined below.

The document manager is a computer program that defines and stores pointers to transactions referring to each operation performed on a document D_{w}. This information is stored in a manager's storage. Each document manager has its own storage and memory space and both are in the DLT 30. The document manager has two main functions:
∘ a) Get as input parameters the data (operation metadata) to be stored in the DLT 30 and the document ID, and sends the transaction to the DLT 30. If the transaction is successful the function will return the hash of the transaction.
∘ b) Get the hash of the transaction and the identifier of the document D_{w} (document ID) as input parameters and store those parameters as a pairing in an array in the document manager. The memory and storage of the document manager is located on the DLT 30, so once the array is stored and the script is executed, this information is stored in the DLT 30.

According to the proposed method, each document D_{w} has a different document manager. The reason behind this design is to have a more robust system in which all of the information related to each document D_{w} is stored in the DLT 30, and can be retrieved through this single element. This is why is very important to store the address of each document manager linking to the identifier of each corresponding document D_{w} in order to access in the future both the information stored in the document manager and the information stored directly in the DLT 30.

Scrip is a computer program where different libraries are defined (in particular a library that will allow working with the document managers) and commands that will allow making different actions with the DLT 30 and the data. For example, the script will be in charge of processing the input data (separating the identifier of the document D_{w} from the lifecycle data), getting and sending data to a database 44, sending the transactions to the DLT 30 (through the document manager) or establishing the connection with the nodes of the DLT 30 that present invention will be working with.

The fourth computer system 40 also comprises an analysis and visualization module/unit 45, i.e. a set of tools that will allow the retrieval of all the information of the lifecycle of a particular document D_{w} previously stored in the DLT 30 by the elements defined above. That means retrieving all the hashes (transaction) associated to a document D_{w} in its document manager and the details (metadata) associated to each document operation included in each transaction represented by its hash.

The database 44 is configured to store and associate the document manager interface, the document manager address and the document ID for each document D_{w} processed by the system. The document will be obtained from the input data of the first step and the interface and the address will be obtained directly through the script using the library described previously.

According to an embodiment, and following the description of Fig. 6, the fourth computer system 40 would work in the following way for the processing of an operation performed on a particular existing document D_{w}. First, an end user or entity accesses a document D_{w} and, a document operation is performed by one of the system modules M1, M2...Mn (e.g. watermarking). Then, the system backend 41 will receive the metadata related to the document operation (e.g. user ID, type of operation performed, relevant data used to perform such operation, etc.), and will process it to separate the document ID from the lifecycle data. The system backend 41 will use the document ID to query the database 44 and retrieve its corresponding document manager interface and the address of the document manager, previously stored in the database 44. If the document ID is not present in the database 44 the system backend 41 will create a new document manager interface and document manager and store this list in the database 44. Then, the backend 41 will execute the document manager, that will send a transaction to the DLT 30 with the metadata related to the lifecycle of the document stored. The DLT 30 will store that data. Finally, the DLT 30 will send to the system backend 41 in return the hash of the previous transaction and the system backend 41 will store in the document manager an array with the transaction hash of the document D_{w} and the identifier of the document D_{w}.

If an authorized user wants to access information of a specific document D_{w} the process will be: with the document ID the system backend 41 retrieves the address and the interface of the document manager correspondent to that identifier from the database 44. With the manager's address and interface, the system backend 41 retrieves the transaction hashes. With the transaction hashes, the user is able to get the information from the DLT 30.

Specific authorized users may access the information through the analysis and visualization module 45, in order to reconstruct the document lifecycle or analyze specific operations on a given file, being able to guarantee (or analyze) its security, confidentiality and integrity.

While the foregoing is directed to embodiments of the present invention, other and further embodiments of the invention may be devised without departing from the basic scope thereof. For example, the different computer systems provided by present invention may be implemented in hardware or software or in a combination of hardware and software.

Additionally, the software programs included as part of the invention may be embodied in a computer program product that includes a computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

## Claims

1. A method for tracking of certified documents lifecycle, the method comprising:
- certifying with integrity and authenticity guarantees, by a second computer system (20), a document (Do) received from a first computer system (10), said certifying including applying a watermark indistinguishable to a human eye to the document (Do), providing a modified document, and performing the following steps:
- computing, by the second computer system (20), a first cryptographic function (ho) of the received document (Do);
- sending, by the second computer system (20), the computed first cryptographic function (ho) to a distributed ledger (30), the distributed ledger (30) storing the first cryptographic function (ho) in at least one memory thereof;
- receiving, by the second computer system (20), a first message digest (hro) corresponding to an identifier of having stored the first cryptographic function (ho) in the distributed ledger (30);
- computing, by the second computer system (20), a key (K) using the received first message digest (hro) and metadata of the document (Do), said computed key (K) being decoded into said watermark;
- computing, by the second computer system (20), a second cryptographic function (hw) of the modified document (Dw), and sending the computed second cryptographic function (hw) and the modified document (Dw) to the distributed ledger(30) for storage thereof; and
- receiving, by the second computer system (20), a second message digest (hrw) corresponding to an identifier of having stored the second cryptographic function (hw) in the distributed ledger (30), and storing said second message digest (hrw) locally in the second computer system (20);
- sending, by the second computer system (20), the modified document (Dw) to the first computer system (10);
- once the modified document (Dw) has been submitted to a transaction, receiving, by a fourth computer system (40), from the second computer system (20), at least an identifier of the modified document (Dw) and an identifier of an operation executed on the modified document (Dw) during said transaction, the fourth computer system (40) further storing information about the transaction in the distributed ledger (30), wherein said information comprises metadata identifying a user executing the transaction, the identifier of the modified document (Dw), a timestamp of the operation and the identifier of the operation;
- executing, by the distributed ledger(30), a computer program that stores pairings composed of said identifier of the modified document (Dw) and a hash value of the transaction in the distributed ledger(30), and sending the hash value to the fourth computer system (40); and
- storing, by the fourth computer system (40), an address of the computer program, an interface of the computer program and the identifier of the modified document (Dw) into a record of a database, such that the record is usable to track future transactions executed on the modified document (Dw).

2. The method of claim 1, wherein the operation comprises at least one of: the editing of the document including signing or adding or removing text, metadata addition, a change or removal of the document, the watermark extraction, a biometric signing of the document, a document access and/or sharing the document through a communication channel including email.

3. The method of claim 1, wherein the information further comprises an affiliation number of the user and/or a policy setting for the metadata and/or a result of the document access attempt including success, partial access or failure.

4. The method of any one of previous claims, wherein the computer program is specific for the modified document (Dw).

5. The method of claim 1, wherein the watermark is replicated in different points of the modified document (Dw).

6. The method of previous claims, wherein the document (Do) is a digital document.

7. A system for tracking of certified documents lifecycle, comprising:
a first computer system (10);
a second computer system (20);
a distributed ledger (30); and
a fourth computer system (40), having a database,
wherein the second computer system (20) is configured to certify with integrity and authenticity guarantees a document (Do) received from the first computer system (10) and to further send the modified document (Dw) to the first computer system (10), the document being certified by applying a watermark indistinguishable to a human eye to the document (Do), providing a modified document, and by performing the following steps:
- computing, by the second computer system (20), a first cryptographic function (ho) of the received document (Do);
- sending, by the second computer system (20), the computed first cryptographic function (ho) to the distributed ledger(30), the distributed ledger(30) storing the first cryptographic function (ho) in at least one memory thereof;
- receiving, by the second computer system (20), a first message digest (hro) corresponding to an identifier of having stored the first cryptographic function (ho) in the distributed ledger(30);
- computing, by the second computer system (20), a key (K) using the received first message digest (hro) and metadata of the document (Do), said computed key (K) being decoded into said watermark;
- computing, by the second computer system (20), a second cryptographic function (hw) of the modified document (Dw), and sending the computed second cryptographic function (hw) and the modified document (Dw) to the distributed ledger(30) for storage thereof; and
- receiving, by the second computer system (20), a second message digest (hrw) corresponding to an identifier of having stored the second cryptographic function (hw) in the distributed ledger(30), and storing said second message digest (hrw) locally in the second computer system (20);
wherein the fourth computer system (40) is configured to receive, from the second computer system (2), once the modified document (Dw) has been submitted to a transaction, at least an identifier of the modified document (Dw) and an identifier of an operation executed on the modified document (Dw) during said transaction, wherein the fourth computer system (40) is further configured to store information about the transaction in the distributed ledger(30), wherein said information comprises metadata identifying a user executing the transaction, the identifier of the modified document (Dw), a timestamp of the operation and the identifier of the operation;
wherein the distributed ledger(30) is configured to:
- execute a computer program that stores pairings composed of said identifier of the modified document (Dw) and a hash value of the transaction; and
- send said hash value to the fourth computer system (40); and
wherein the fourth computer system (40) is further configured to store an address of the computer program, an interface of the computer program and the identifier of the modified document (Dw) into a record of the database, such that the record is usable to track future transactions executed on the modified document (Dw).

8. The system of claim 7, wherein the fourth computer system (40) further comprises an analysis and visualization module configured to allow the retrieval of data about the modified document (Dw) stored in the distributed ledger(30).

9. The system of claim 7, wherein the information further comprises an affiliation number of the user and/or a policy setting for the metadata and/or a result of the document access attempt including success, partial access or failure.

10. The system of claim 7, wherein the computer program is specific for the modified document (Dw).

11. A non-transitory computer readable medium comprising code instructions which when executed by at least one processor of a respective computer system of a plurality of computer systems implement the method of any of claims 1 to 6.

## Patentansprüche

1. Verfahren zum Verfolgen des Lebenszyklus zertifizierter Dokumente, wobei das Verfahren umfasst:
- Zertifizieren mit Integritäts- und Authentizitätsgarantien, von einem zweiten Computersystem (20), eines von einem ersten Computersystem (10) empfangenen Dokuments (Do), wobei das Zertifizieren das Anbringen eines für das menschliche Auge nicht unterscheidbaren Wasserzeichens an dem Dokument (Do) umfasst, sodass ein modifiziertes Dokument bereitgestellt wird, und Ausführen der folgenden Schritte:
- Berechnen, von dem zweiten Computersystem (20), einer ersten kryptographischen Funktion (ho) des empfangenen Dokuments (Do);
- Senden, von dem zweiten Computersystem (20), der berechneten ersten kryptographischen Funktion (ho) an ein verteiltes Hauptbuch (30), wobei das verteilte Hauptbuch (30) die erste kryptographische Funktion (ho) in mindestens einem Speicher davon speichert;
- Empfangen, von dem zweiten Computersystem (20), eines ersten Nachrichten-Digests (hro), der einer Kennung des Speicherns der ersten kryptographischen Funktion (ho) in dem verteilten Hauptbuch (30) entspricht;
- Berechnen, von dem zweiten Computersystem (20), eines Schlüssels (K) unter Verwendung des empfangenen ersten Nachrichten-Digests (hro) und von Metadaten des Dokuments (Do), wobei der berechnete Schlüssel (K) in das Wasserzeichen decodiert wird;
- Berechnen, von dem zweiten Computersystem (20), einer zweiten kryptographischen Funktion (hw) des modifizierten Dokuments (Dw) und Senden der berechneten zweiten kryptographischen Funktion (hw) und des modifizierten Dokuments (Dw) an das verteilte Hauptbuch (30) zur Speicherung davon; und
- Empfangen, von dem zweiten Computersystem (20), eines zweiten Nachrichten-Digests (hrw), der einer Kennung des Speicherns der zweiten kryptographischen Funktion (hw) in dem verteilten Hauptbuch (30) entspricht, und Speichern des zweiten Nachrichten-Digests (hrw) lokal im zweiten Computersystem (20);
- Senden, von dem zweiten Computersystem (20), des modifizierten Dokuments (Dw) an das erste Computersystem (10);
- sobald das modifizierte Dokument (Dw) einer Transaktion unterzogen wurde, Empfangen, von einem vierten Computersystem (40), mindestens einer Kennung des modifizierten Dokuments (Dw) und einer Kennung einer Operation, die an dem modifizierten Dokument (Dw) während der Transaktion ausgeführt wird, von dem zweiten Computersystem (20), wobei das vierte Computersystem (40) ferner Informationen über die Transaktion in dem verteilten Hauptbuch (30) speichert, wobei die Informationen Metadaten, die einen die Transaktion ausführenden Benutzer identifizieren, die Kennung des modifizierten Dokuments (Dw), einen Zeitstempel der Operation und die Kennung der Operation umfassen;
- Ausführen, von dem verteilten Hauptbuch (30), eines Computerprogramms, das Paarungen speichert, die aus der Kennung des modifizierten Dokuments (Dw) und einem Hash-Wert der Transaktion in dem verteilten Hauptbuch (30) zusammengesetzt sind, und Senden des Hash-Wertes an das vierte Computersystem (40); und
- Speichern, von dem vierten Computersystem (40), einer Adresse des Computerprogramms, einer Schnittstelle des Computerprogramms und der Kennung des modifizierten Dokuments (Dw) in einem Datensatz einer Datenbank, so dass der Datensatz verwendet werden kann, um zukünftige Transaktionen zu verfolgen, die auf dem modifizierten Dokument (Dw) ausgeführt werden.

2. Verfahren nach Anspruch 1, wobei die Operation mindestens eines von Folgendem umfasst: Bearbeiten des Dokuments, einschließlich Signieren oder Hinzufügen oder Entfernen von Text, Hinzufügen von Metadaten, Ändern oder Entfernen des Dokuments, Wasserzeichenextraktion, biometrisches Signieren des Dokuments, Dokumentzugriff und/oder Teilen des Dokuments über einen Kommunikationskanal, einschließlich E-Mail.

3. Verfahren nach Anspruch 1, wobei die Informationen ferner eine Zugehörigkeitsnummer des Benutzers und/oder eine Richtlinieneinstellung für die Metadaten und/oder ein Ergebnis des Dokumentzugriffsversuchs einschließlich Erfolg, Teilzugriff oder Misserfolg umfassen.

4. Verfahren nach einem der vorhergehenden Ansprüche, wobei das Computerprogramm für das modifizierte Dokument (Dw) spezifisch ist.

5. Verfahren nach Anspruch 1, wobei das Wasserzeichen an verschiedenen Stellen des modifizierten Dokuments (Dw) repliziert wird.

6. Verfahren nach den vorherigen Ansprüchen, wobei das Dokument (Do) ein digitales Dokument ist.

7. System zum Verfolgen des Lebenszyklus zertifizierter Dokumente, umfassend:
ein erstes Computersystem (10);
ein zweites Computersystem (20);
ein verteiltes Hauptbuch (30); und
ein viertes Computersystem (40) mit einer Datenbank,
wobei das zweite Computersystem (20) konfiguriert ist, um ein vom ersten Computersystem (10) empfangenes Dokument (Do) mit Integritäts- und Authentizitätsgarantien zu zertifizieren und ferner das modifizierte Dokument (Dw) an das erste Computersystem (10) zu senden, wobei das Dokument durch Anbringen eines für das menschliche Auge nicht erkennbaren Wasserzeichens an dem Dokument (Do) zertifiziert wird, sodass ein modifiziertes Dokument bereitgestellt wird, und durch Ausführen der folgenden Schritte:
- Berechnen, von dem zweiten Computersystem (20), einer ersten kryptographischen Funktion (ho) des empfangenen Dokuments (Do);
- Senden, von dem zweiten Computersystem (20), der berechneten ersten kryptographischen Funktion (ho) an das verteilte Hauptbuch (30), wobei das verteilte Hauptbuch (30) die erste kryptographische Funktion (ho) in mindestens einem Speicher davon speichert;
- Empfangen, von dem zweiten Computersystem (20), eines ersten Nachrichten-Digests (hro), der einer Kennung des Speicherns der ersten kryptographischen Funktion (ho) in dem verteilten Hauptbuch (30) entspricht;
- Berechnen, von dem zweiten Computersystem (20), eines Schlüssels (K) unter Verwendung des empfangenen ersten Nachrichten-Digests (hro) und von Metadaten des Dokuments (Do), wobei der berechnete Schlüssel (K) in das Wasserzeichen decodiert wird;
- Berechnen, von dem zweiten Computersystem (20), einer zweiten kryptographischen Funktion (hw) des modifizierten Dokuments (Dw) und Senden der berechneten zweiten kryptographischen Funktion (hw) und des modifizierten Dokuments (Dw) an das verteilte Hauptbuch (30) zur Speicherung davon; und
- Empfangen, von dem zweiten Computersystem (20), eines zweiten Nachrichten-Digests (hrw), der einer Kennung des Speicherns der zweiten kryptographischen Funktion (hw) in dem verteilten Hauptbuch (30) entspricht, und Speichern des zweiten Nachrichten-Digests (hrw) lokal im zweiten Computersystem (20);
wobei das vierte Computersystem (40) konfiguriert ist, von dem zweiten Computersystem (2), sobald das modifizierte Dokument (Dw) einer Transaktion unterzogen wurde, mindestens eine Kennung des modifizierten Dokuments (Dw) und eine Kennung einer Operation zu empfangen, die an dem modifizierten Dokument (Dw) während der Transaktion ausgeführt wird, wobei das vierte Computersystem (40) ferner konfiguriert ist, um Informationen über die Transaktion in dem verteilten Hauptbuch (30) zu speichern, wobei die Informationen Metadaten, die einen die Transaktion ausführenden Benutzer identifizieren, die Kennung des modifizierten Dokuments (Dw), einen Zeitstempel der Operation und die Kennung der Operation umfassen:
wobei das verteilte Hauptbuch (30) konfiguriert ist zum:
- Ausführen eines Computerprogramms, das Paarungen speichert, die aus der Kennung des modifizierten Dokuments (Dw) und einem Hash-Wert der Transaktion zusammengesetzt sind; und
- Senden des Hash-Wertes an das vierte Computersystem (40); und
wobei das vierte Computersystem (40) ferner konfiguriert ist, eine Adresse des Computerprogramms, eine Schnittstelle des Computerprogramms und die Kennung des modifizierten Dokuments (Dw) in einem Datensatz der Datenbank zu speichern, sodass der Datensatz verwendet werden kann, um zukünftige Transaktionen zu verfolgen, die auf dem modifizierten Dokument (Dw) ausgeführt werden.

8. System nach Anspruch 7, wobei das vierte Computersystem (40) ferner ein Analyse- und Visualisierungsmodul umfasst, das konfiguriert ist, um das Abrufen von Daten über das modifizierte Dokument (Dw) zu ermöglichen, die in dem verteilten Hauptbuch (30) gespeichert sind.

9. System nach Anspruch 7, wobei die Informationen ferner eine Zugehörigkeitsnummer des Benutzers und/oder eine Richtlinieneinstellung für die Metadaten und/oder ein Ergebnis des Dokumentzugriffsversuchs einschließlich Erfolg, Teilzugriff oder Misserfolg umfassen.

10. System nach Anspruch 7, wobei das Computerprogramm für das modifizierte Dokument (Dw) spezifisch ist.

11. Nichtflüchtiges computerlesbares Medium, das Codeanweisungen umfasst, die, wenn sie von mindestens einem Prozessor eines jeweiligen Computersystems einer Vielzahl von Computersystemen ausgeführt werden, das Verfahren nach einem der Ansprüche 1 bis 6 implementieren.

## Revendications

1. Procédé de suivi du cycle de vie des documents certifiés, le procédé comprenant :
- la certification avec des garanties d'intégrité et d'authenticité, par un deuxième système informatique (20), d'un document (Do) reçu d'un premier système informatique (10), ladite certification incluant l'application d'un filigrane indiscernable à l'œil humain sur le document (Do), la fourniture d'un document modifié, et la réalisation des étapes suivantes :
- le calcul, par le deuxième système informatique (20), d'une première fonction cryptographique (ho) du document reçu (Do) ;
- l'envoi, par le deuxième système informatique (20), de la première fonction cryptographique calculée (ho) à un registre distribué (30), le registre distribué (30) stockant la première fonction cryptographique (ho) dans au moins une mémoire de celui-ci ;
- la réception, par le deuxième système informatique (20), d'un premier condensé de message (hro) correspondant à un identifiant d'avoir stocké la première fonction cryptographique (ho) dans le registre distribué (30) ;
- le calcul, par le deuxième système informatique (20), d'une clé (K) utilisant le premier condensé de message reçu (hro) et les métadonnées du document (Do), ladite clé calculée (K) étant décodée dans ledit filigrane ;
- le calcul, par le deuxième système informatique (20), d'une deuxième fonction cryptographique (hw) du document modifié (Dw), et l'envoi de la deuxième fonction cryptographique calculée (hw) et du document modifié (Dw) au registre distribué (30) pour le stockage dans celui-ci ; et
- la réception, par le deuxième système informatique (20), d'un deuxième condensé de message (hrw) correspondant à un identifiant d'avoir stocké la deuxième fonction cryptographique (hw) dans le registre distribué (30), et le stockage dudit deuxième condensé de message (hrw) localement dans le deuxième système informatique (20) ;
- l'envoi, par le deuxième système informatique (20), du document modifié (Dw) au premier système informatique (10) ;
- une fois que le document modifié (Dw) a été soumis à une transaction, la réception, par un quatrième système informatique (40), du deuxième système informatique (20), d'au moins un identifiant du document modifié (Dw) et d'un identifiant d'une opération exécutée sur le document modifié (Dw) lors de ladite transaction, le quatrième système informatique (40) stockant en outre des informations sur la transaction dans le registre distribué (30), dans lequel lesdites informations comprennent des métadonnées identifiant un utilisateur exécutant la transaction, l'identifiant du document modifié (Dw), un horodatage de l'opération et l'identifiant de l'opération ;
- l'exécution, par le registre distribué (30), d'un programme informatique qui stocke des appariements composés dudit identifiant du document modifié (Dw) et d'une valeur de hachage de la transaction dans le registre distribué (30), et l'envoi de la valeur de hachage au quatrième système informatique (40) ; et
- le stockage, par le quatrième système informatique (40), d'une adresse du programme informatique, d'une interface du programme informatique et de l'identifiant du document modifié (Dw) dans un enregistrement d'une base de données, de telle sorte que l'enregistrement est utilisable pour suivre les transactions futures exécutées sur le document modifié (Dw).

2. Procédé selon la revendication 1, dans lequel l'opération comprend au moins l'un parmi : l'édition du document incluant la signature ou l'ajout ou la suppression de texte, l'ajout de métadonnées, une modification ou une suppression du document, l'extraction de filigrane, une signature biométrique du document, un accès au document et/ou un partage du document par le biais d'un canal de communication incluant le courrier électronique.

3. Procédé selon la revendication 1, dans lequel les informations comprennent en outre un numéro d'affiliation de l'utilisateur et/ou un paramètre de politique pour les métadonnées et/ou un résultat de la tentative d'accès au document, y compris le succès, l'accès partiel ou l'échec.

4. Procédé selon l'une quelconque des revendications précédentes, dans lequel le programme informatique est spécifique au document modifié (Dw).

5. Procédé selon la revendication 1, dans lequel le filigrane est répliqué en différents points du document modifié (Dw).

6. Procédé des revendications précédentes, dans lequel le document (Do) est un document numérique.

7. Système de suivi du cycle de vie des documents certifiés, comprenant :
un premier système informatique (10) ;
un deuxième système informatique (20) ;
un registre distribué (30) ; et
un quatrième système informatique (40), ayant une base de données,
dans lequel le deuxième système informatique (20) est configuré pour certifier avec des garanties d'intégrité et d'authenticité un document (Do) reçu du premier système informatique (10) et pour envoyer en outre le document modifié (Dw) au premier système informatique (10), le document étant certifié en appliquant un filigrane indiscernable à l'œil humain sur le document (Do), fournissant un document modifié, et en réalisant les étapes suivantes :
- le calcul, par le deuxième système informatique (20), d'une première fonction cryptographique (ho) du document reçu (Do) ;
- l'envoi, par le deuxième système informatique (20), de la première fonction cryptographique calculée (ho) au registre distribué (30), le registre distribué (30) stockant la première fonction cryptographique (ho) dans au moins une mémoire de celui-ci ;
- la réception, par le deuxième système informatique (20), d'un premier condensé de message (hro) correspondant à un identifiant d'avoir stocké la première fonction cryptographique (ho) dans le registre distribué (30) ;
- le calcul, par le deuxième système informatique (20), d'une clé (K) utilisant le premier condensé de message reçu (hro) et les métadonnées du document (Do), ladite clé calculée (K) étant décodée dans ledit filigrane ;
- le calcul, par le deuxième système informatique (20), d'une deuxième fonction cryptographique (hw) du document modifié (Dw), et l'envoi de la deuxième fonction cryptographique calculée (hw) et du document modifié (Dw) au registre distribué (30) pour le stockage dans celui-ci ; et
- la réception, par le deuxième système informatique (20), d'un deuxième condensé de message (hrw) correspondant à un identifiant d'avoir stocké la deuxième fonction cryptographique (hw) dans le registre distribué (30), et le stockage dudit deuxième condensé de message (hrw) localement dans le deuxième système informatique (20) ;
dans lequel le quatrième système informatique (40) est configuré pour recevoir, du deuxième système informatique (2), une fois que le document modifié (Dw) a été soumis à une transaction, au moins un identifiant du document modifié (Dw) et un identifiant d'une opération exécutée sur le document modifié (Dw) lors de ladite transaction, dans lequel le quatrième système informatique (40) est en outre configuré pour stocker des informations sur la transaction dans le registre distribué (30), dans lequel lesdites informations comprennent des métadonnées identifiant un utilisateur exécutant la transaction, l'identifiant du document modifié (Dw), un horodatage de l'opération et l'identifiant de l'opération :
dans lequel le registre distribué (30) est configuré pour :
- exécuter un programme informatique qui stocke des appariements composés dudit identifiant du document modifié (Dw) et d'une valeur de hachage de la transaction ; et
- envoyer ladite valeur de hachage au quatrième système informatique (40) ; et
dans lequel le quatrième système informatique (40) est en outre configuré pour stocker une adresse du programme informatique, une interface du programme informatique et l'identifiant du document modifié (Dw) dans un enregistrement de la base de données, de telle sorte que l'enregistrement est utilisable pour suivre les transactions futures exécutées sur le document modifié (Dw).

8. Système selon la revendication 7, dans lequel le quatrième système informatique (40) comprend en outre un module d'analyse et de visualisation configuré pour permettre la récupération de données sur le document modifié (Dw) stocké dans le registre distribué (30).

9. Système selon la revendication 7, dans lequel les informations comprennent en outre un numéro d'affiliation de l'utilisateur et/ou un paramètre de politique pour les métadonnées et/ou un résultat de la tentative d'accès au document, y compris le succès, l'accès partiel ou l'échec.

10. Système selon la revendication 7, dans lequel le programme informatique est spécifique au document modifié (Dw).

11. Support lisible par ordinateur non transitoire comprenant des instructions de code qui, lorsqu'elles sont exécutées par au moins un processeur d'un système informatique respectif d'une pluralité de systèmes informatiques, mettent en œuvre le procédé de l'une quelconque des revendications 1 à 6.
